# FASCICULE DE BREVET EUROPEEN

(11) **EP 1 313 544 B1**
(45) Date de publication et mention de la délivrance du brevet: **14.09.2005**
(21) Numéro de dépôt: 01958207.1
(22) Date de dépôt: 01.08.2001
(51) Int. Cl.: B01D 53/88, B01D 53/04, B01J 35/00

(54) **MEDIA FILTRANT, PROCEDE DE FABRICATION**
FILTERMEDIUM UND VERFAHREN ZUR HERSTELLUNG DESSELBEN
FILTERING MEDIUM, METHOD FOR MAKING SAME

(30) Priorité: 14.08.2000 FR 0010622
(43) Date de publication de la demande: 28.05.2003
(73) Titulaire: Ahlstrom Research and Services, 38780 Pont Evêque (FR); Ahlstrom Corporation, 00130 Helsinki (FI)
(72) Inventeur: DUSSAUD, Joseph, F-38200 VIENNE (FR); BOUVIER, Léonie, F-38440 BEAUVOIR DE MARC (FR); CHEVALIER, Fabien, F-38780 EYZIN PINET (FR)
(74) Mandataire: Vuillermoz, Bruno
(86) Numéro de dépôt international: PCT/FR2001/002516
(87) Numéro de publication internationale: WO 2002/013950

(56) Documents cités:
- WO-A-99/51345
- CA-A- 2 186 934
- JP-A- 11 179 118
- PATENT ABSTRACTS OF JAPAN vol. 1999, no. 12, 29 octobre 1999 (1999-10-29) & JP 11 179118 A (AQUEOUS RESERCH:KK;FUJISHIMA AKIRA; HASHIMOTO KAZUHITO), 6 juillet 1999 (1999-07-06) cité dans la demande
- PATENT ABSTRACTS OF JAPAN vol. 2000, no. 01, 31 janvier 2000 (2000-01-31) & JP 11 276562 A (MITSUBISHI PAPER MILLS LTD), 12 octobre 1999 (1999-10-12)
- PATENT ABSTRACTS OF JAPAN vol. 2000, no. 02, 29 février 2000 (2000-02-29) & JP 11 319580 A (AQUEOUS RESERCH:KK), 24 novembre 1999 (1999-11-24)
- PATENT ABSTRACTS OF JAPAN vol. 1995, no. 04, 31 mai 1995 (1995-05-31) & JP 07 024256 A (NIPPONDENSO CO LTD;OTHERS: 01), 27 janvier 1995 (1995-01-27)
- PATENT ABSTRACTS OF JAPAN vol. 016, no. 086 (C-0916), 3 mars 1992 (1992-03-03) & JP 03 275139 A (KAWASAKI STEEL CORP), 5 décembre 1991 (1991-12-05)

## Description

L'invention concerne un média filtrant. Elle se rapporte également au procédé de fabrication dudit média. Elle a enfin pour objet l'utilisation du média pour la purification d'effluents gazeux ou liquides.

La réaction dite "photocatalytique", encore dénommée photocatalyse, consiste à détruire les différents polluants organiques et/ou inorganiques présents dans les effluents gazeux, et notamment l'air, ou dans les effluents liquides par réaction photochimique, laquelle est provoquée par l'irradiation d'un photocatalyseur par rayonnement ultraviolet.

Pour l'essentiel, la photocatalyse est initiée en activant un solide semi-conducteur (agent photocatalyseur tel que par exemple le TiO₂) par des rayonnements UV à une longueur d'onde inférieure à 380 nanomètres, provoquant des changements électroniques au sein du semi-conducteur et conduisant en présence d'effluents gazeux ou liquides, tels que l'air ou l'eau, à la création de radicaux oxygénés et hydroxyles à la surface du semi-conducteur. Ces radicaux attaquent les composés organiques adsorbés sur le semi-conducteur et par succession de réactions chimiques dégradent les composés jusqu'au stade final de l'oxydation.

Comme déjà dit, en tant qu'agent photocatalyseur susceptible de déclencher la réaction photocatalytique, on peut utiliser notamment, mais de façon non limitative, du dioxyde de titane TiO₂ anatase, lequel activé par la lumière UV se trouve modifié électroniquement, de sorte à conduire à la formation de radicaux hydroxyle OH^{•} et d'oxygène O^{•} aptes à attaquer les chaînes carbonées organiques adsorbées sur le TiO₂, en les dégradant jusqu'à ce que le carbone organique soit complètement transformé en dioxyde de carbone.

On peut cependant envisager d'autres agents photocatalyseurs tels que ceux notamment faisant partie du groupe des oxydes métalliques, des oxydes alcalino-terreux, des oxydes d'actinide et des oxydes de terres rares. En pratique, les agents photocatalyseurs sont fixés au moyen d'agents liants sur des supports, tels que notamment des non-tissés naturels ou synthétiques, des fibres de verre ou encore des grilles métalliques ou plastiques.

Des compositions photocatalytiques résultant du mélange d'un agent photocatalyseur et de l'agent liant particulièrement avantageuses sont décrites dans le document WO 99/51345 du Demandeur.

Ces compositions peuvent être utilisées pour le traitement de l'air. En effet, l'air est susceptible de contenir un grand nombre de polluants, parmi lesquels les NOₓ, NH₃, H₂S, CO, O₃, les alcènes en C₂-C₄ chlorés ou non, le chlorométhane, l'iso-octane, le benzène, le toluène, le xylène, l'isopropylbenzène, les alcools aliphatiques saturés en C₁-C₄, le méthylmercaptan, le chlorophénol, le nitrophénol, le méthyltertiobutyléther, le diméthoxyméthane, les aldéhydes en C₁-C₄, l'acétone, l'acide formique, l'acide acétique, l'acide 2-méthylpropanoïque, le chlorure de dichloroacétyle, le diméthylformamide, le triméthylamine, l'acétonitrile, et la pyridine, le méthanethiol, le diméthyldisulfure.

Les compositions photocatalytiques peuvent être également utilisées pour le traitement d'effluents liquides, en particulier d'eau polluée par des composés organiques, des bactéries, des virus, des microbes etc...

Dans le document WO 99/51345 précité, le Demandeur a décrit un média filtrant pour le traitement de l'air ou de l'eau, constitué d'un support enduit d'une composition résultant d'un mélange d'agent liant, d'agent photocatalyseur et de charbon actif. Comme expliqué dans ce document, ce type de média filtrant a pour objectif :
- tout d'abord, du fait de la surface spécifique élevée du charbon actif, d'adsorber les agents polluants présents dans les pics de pollution ;
- puis, par réaction photocatalytique sous rayonnement ultraviolet, de dégrader les polluants adsorbés sur le charbon actif, par désorption vers l'agent photocatalyseur, permettant ainsi la régénération dudit charbon.

Même si, comme indiqué, le mélange intime de charbon actif et d'agent photocatalyseur permet d'augmenter la durée de vie du média, on observe immanquablement une saturation des sites du charbon actif par le polluant du fait notamment que le charbon actif présent à la surface de la couche empêche les UV d'accéder à la partie de l'agent photocatalyseur présente dans l'épaisseur. En outre, rien n'est indiqué concernant la masse de la couche de charbon actif et la proportion de charbon actif qu'elle incorpore nécessaire à une dépollution correcte sans saturation. En d'autres termes, la réaction photocatalytique n'est pas suffisamment efficace pour permettre de régénérer de façon correcte le charbon actif de sorte qu'il est nécessaire d'échanger le média saturé de ses polluants par un média neuf de manière relativement fréquente. Bien évidemment le rejet du média filtrant chargé de ses polluants n'est pas sans conséquence sur l'environnement.

Le document JP-11179118 décrit un média filtrant sous forme laminée résultant de l'association d'une couche de charbon actif avec une couche d'agent photocatalyseur. Là encore, rien n'est indiqué concernant la masse de la couche à base de charbon actif et la proportion de charbon actif nécessaire pour permettre une dépollution efficace tout en évitant de saturer ledit charbon actif.

Dès lors, le problème que se propose de résoudre l'invention est de développer un nouveau média filtrant du type de celui décrit précédemment c'est à dire à base d'agent photocatalyseur et de charbon actif qui ne présente pas les inconvénients précités, s'agissant notamment du problème de saturation du charbon actif par l'agent polluant.

Pour ce faire, le média filtrant à base d'agent photocatalyseur et de charbon actif de l'invention comprend un support perméable recouvert d'une première couche à base de charbon actif puis d'une seconde couche distincte à base d'agent photocatalyseur, ou inversement, la masse de la couche à base de charbon actif étant comprise entre 10 et 300 g/m².

Le Demandeur a en effet constaté que de façon tout à fait surprenante, le fait de présenter l'agent photocatalyseur et le charbon actif sous forme de deux couches distinctes, permettait d'augmenter l'efficacité de la réaction photocatalytique générée par la combinaison de l'agent photocatalyseur et du rayonnement UV et ce, de façon suffisante pour permettre la désaturation continue, et donc la régénération à l'infini du charbon actif lorsque la masse de la couche à base de charbon actif est comprise entre 10 et 300 g/m² et la proportion de charbon actif correspond aux fourchettes indiquées à la revendication 1. Dès lors, même si le média devait être éliminé, du fait notamment du vieillissement du support, il le serait avec un charbon actif désaturé donc sans incidence sur l'environnement.

Au delà des fourchettes précitées, soit le média filtrant ne parvient pas à fixer de manière efficace les pics de pollution (fourchettes supérieures), soit l'épaisseur de ladite couche devient trop importante de sorte que la partie inférieure, ou la supérieure de la couche, suivant le cas, devient inaccessible à l'action de l'agent photocatalyseur (fourchettes supérieures).

Dans la suite de la description et dans les revendications, par l'expression « support perméable », on désigne une structure perméable à l'air et aux effluents liquides se présentant sous la forme d'une feuille obtenue à partir de fibres à usage textile, naturelles ou chimiques seules ou en mélange, cette feuille pouvant être un non tissé, un tissu voire même une grille. Comme fibres entrant dans la constitution d'une telle feuille, on utilise de préférence mais de façon non limitative, les fibres naturelles, en particulier de cellulose, de coton, les fibres chimiques organiques, en particulier de cellulose modifiées, de methylcellulose, de rayonne, acryliques, de nylon, de polyester, de polyéthylène, de polypropylène, de polyamide, et les fibres chimiques inorganiques, en particulier de verres et de métal.

Dans une forme de réalisation préférée, le support se présente sous la forme d'un non tissé à base de fibres naturelles et de fibres chimiques organiques. Pour augmenter la résistance mécanique du support, le support comprend de 40 à 80%, avantageusement 50% en poids de fibres de cellulose, le complément à 100% étant constitué de fibres de polypropylène.

Selon une autre caractéristique de l'invention, la résistance mécanique et donc la masse du support est variable et en pratique comprise entre 5 et 150 g/m² en fonction du flux d'effluent liquide ou gazeux.

Le charbon actif est bien connu de l'homme du métier et peut se présenter sous différentes formes en particulier sous forme de poudre, de fibres ou encore de nappe ajourée, dont les procédés d'obtention sont plus particulièrement décrits dans les documents US-A-4069297 et US-A-4285831, cités à titre de référence. Cependant, il est connu que les fibres ou les particules de carbone activé ne présentent aucune capacité de liaison entre elles.

Pour résoudre ce problème, le charbon actif, lorsqu'il se présente sous forme de fibres ou de particules de carbone activé, est incorporé au sein d'un mélange de fibres naturelles et/ou de fibres chimiques organiques, du même types que celles listées précédemment, les fibres naturelles ou chimiques assurant la liaison des fibres et/ou particules de carbone activé entre elles. Dans ce cas, la couche à base de charbon actif se présente sous forme d'une nappe, laquelle est obtenue avantageusement par voie humide.

En pratiques, les fibre de carbone activé ont une longueur comprise entre 2 et 7 mm, pour un diamètre compris entre 10 et 100 micromètres. De même, les particules de charbon actif se présentent sous forme d'une poudre, dont la taille des grains constitutifs est comprise entre 0.1 et 100 micromètres.

Dans une première forme de réalisation, la couche à base de charbon actif est constituée d'un mélange comprenant de 20 à 75%, avantageusement 50% en poids de fibres de carbone activé, le complément à 100% étant constitué d'un mélange à base de fibres naturelles et/ou de fibres chimiques organiques. Pour une concentration inférieure à 20%, la quantité de carbone activé n'est pas suffisante pour permettre d'adsorber les pics importants de pollution. Pour une concentration en fibres de carbone activé supérieure à 75%, le média filtrant devient économiquement moins intéressant du fait du coût élevé des fibres de carbone activé.

Dans une seconde forme de réalisation, la couche à base de charbon actif est constituée d'un mélange comprenant de 70 à 90%, avantageusement 80% en poids de particules de carbone activé, le complément à 100% étant constitué d'un mélange à base de fibres naturelles et/ou de fibres chimiques organiques. De même que précédemment, pour une concentration inférieure à 70%, la quantité de carbone activé n'est pas suffisante pour permettre d'absorber les pics importants de pollution. Pour concentration en particules de carbone activé supérieure à 90%, le média filtrant devient moins intéressant du fait du coût élevé des particules de carbone activé.

Par ailleurs, pour améliorer la cohésion des fibres naturelles et/ou chimiques avec les particules et/ou les fibres de carbone activé, la couche à base de charbon actif comprend en outre au moins un agent liant. Avantageusement, la couche à base de charbon actif comprend entre 1 et 10% en poids, avantageusement 5% en poids d'amidon modifié. Dans la suite de la description et dans les revendications, l'expression « amidon modifié » désigne l'amidon modifié se présentant sous forme de fibres tel que celui décrit dans le document EP-A-617742. Le Demandeur a en effet constaté que de façon tout à fait surprenante, cet amidon permettait de renforcer la cohésion des fibres entre elles à un point tel que l'épaisseur de la couche s'en trouvait considérablement réduite, et ce sans perte de perméabilité.

Comme déjà dit, le charbon actif peut également se présenter sous forme d'une nappe ajourée. Selon ce mode de réalisation, la couche à base de charbon actif se présente sous forme d'un tissu de carbone activé dont la maille est comprise entre 0,1 et 5 mm, avantageusement 2 mm, le tissu étant obtenu par chauffage à 900°C d'un tissu fabriqué à partir de fibres chimique organiques.

De façon générale, il est nécessaire pour que la réaction photocatalytique puisse être initiée, que la majorité des particules d'agent photocatalyseur soit accessible au rayonnement UV.

En conséquence, lorsque le charbon actif se présente sous forme de fibres ou de particules, la couche à base de charbon actif constituera la première couche, directement au contact du support, l'agent photocatalyseur entrant dans la composition de la seconde couche. En effet, dans cette hypothèse, le volume occupé par le charbon actif n'empêche pas le rayonnement UV d'atteindre l'agent photocatalyseur.

En revanche, lorsque la couche à base de charbon actif se présente sous forme d'un tissu de maille déterminée, l'agent photocatalyseur peut être directement enduit sur le support, la couche à base de charbon actif constituant la seconde couche. En effet, les mailles du tissu, permettent le passage du rayonnement, et donc son contact avec l'agent photocatalyseur même si celui ci est enduit directement sur le support. Cependant et dans une autre forme de réalisation, le tissu de charbon actif peut être appliqué directement sur le support, constituant alors la première couche.

S'agissant de l'agent photocatalyseur entrant dans la composition de la couche à base d'agent photocatalyseur, celui-ci peut être choisi dans le groupe comprenant les oxydes métalliques, les oxydes comprenant alcalinoterreux, les oxydes d'actinide et les oxydes de terres rares.

Dans une forme de réalisation avantageuse telle que celle décrite dans le document WO 99/51345 du Demandeur, la couche à base d'agent photocatalyseur se présente sous la forme d'un mélange comprenant entre 10 et 60 parties en sec, avantageusement 50 parties, d'une dispersion colloïdale aqueuse de dioxyde de silice (SiO₂), le complément à 100 parties étant constitué de TiO₂ anatase.

Par ailleurs, pour permettre une liaison efficace des particules de TiO₂ non seulement entre elles, mais également au matelas fibreux constituant la première couche ou le support, les particules de SiO₂ représentent de 20 à 50% en poids de la dispersion aqueuse colloïdale et ont un diamètre compris entre 10 et 40 nanomètres.

Par ailleurs; pour que la réaction photocatalytique puisse être efficace et que la désorption du charbon actif se fasse régulièrement, la couche à base d'agent photocatalyseur comprend entre 5 et 40 g/m², avantageusement 20 g/m² d'agent photocatalyseur. Pour une valeur inférieure à 5 g/m², la réaction photocatalytique est réduite, compte-tenu de la trop faible épaisseur de la couche. Au contraire, pour une valeur supérieure à 40 g/m², la masse d'agent photocatalyseur devient trop élevée, interdisant au rayonnement UV d'atteindre les particules d'agent photocatalyseur présentes à la base de la couche.

Par ailleurs, et dans une forme de réalisation perfectionnée, afin d'augmenter le rendement de la photocatalyse, la face libre du support non recouverte des deux couches est enduite d'une couche à base d'agent photocatalyseur.

L'invention concerne également un procédé pour la fabrication du média filtrant précédemment décrit.

Bien entendu, le procédé de fabrication variera en fonction de la structure, non seulement du support, mais également de la couche à base de charbon actif.

Selon un premier mode de réalisation, l'invention concerne un procédé pour la fabrication d'un média filtrant à base d'agent photocatalyseur et de charbon actif selon lequel, sur un support constitué d'un non tissé à base de fibres naturelles et/ou de fibres chimiques organiques, on applique une première couche à base de fibres naturelles et/ou chimiques organiques et de fibres ou des particules de carbone activé, puis une seconde couche à base d'agent photocatalyseur, la masse de la couche à base de charbon actif étant comprise entre 10 et 300 g/m².

Selon une première caractéristique, le support est fabriqué par voie humide sur machine papetière. Bien entendu, la composition du support est variable et fonction en particulier, de la résistance mécanique et de la perméabilité souhaitées. Les supports à base de fibres de cellulose et de fibres chimiques organiques du type polypropylène sont préférées.

De la même manière, la première couche est fabriquée par voie humide et directement appliquée sur le support, la solidarisation étant obtenue par égouttage. Ce procédé est particulièrement avantageux dans la mesure où il permet de travailler en continu sur une machine papetière, en prévoyant une seconde caisse de tête destinée à la préparation de la suspension à base de charbon actif La couche à base de charbon est alors déposée sur le support humide, puis par égouttage de l'eau vient s'imprégner à la surface du support: L'ensemble support / première couche est ensuite séché avant d'être enduit de la seconde couche à base d'agent photocatalyseur. Dans une autre forme de réalisation , la première couche est appliquée sur le support par presse encolleuse (size press).

La couche à base d'agent photocatalyseur correspond de préférence à la composition photocatalytique décrite dans le document précité du Demandeur.

Cette seconde couche peut être appliquée de différentes manières pour conduire soit à une couche d'épaisseur régulière soit à des ponctuations d'agent photocatalyseur. Dès lors et dans une première forme de réalisation, la seconde couche est appliquée sur la première couche par pulvérisation ou enduction par presse encolleuse. Dans un second mode de réalisation, la seconde couche est appliquée par rouleau à cadre rotatif, permettant d'obtenir des dépôts ponctuels d'agent photocatalyseur.

L'invention concerne également un procédé pour la fabrication d'un média filtrant à base d'agent photocatalyseur et de charbon actif selon lequel, sur un support constitué d'un non tissé à base de fibres naturelles et/ou de fibres chimiques organiques, on applique une première couche à base d'agent photocatalyseur, puis une seconde couche constituée d'un tissu de carbone activé, la masse de la couche à base de charbon actif étant comprise entre 10 et 300 g/m² et incorporant entre 10 et 100 % en poids de charbon actif.

De même que précédemment, le support est fabriqué par voie humide sur machine papetière. Bien entendu, la composition du support est variable et fonction en particulier, de la résistance mécanique souhaitée. Les supports à base de fibres de cellulose et de fibres chimiques organiques du type polypropylène sont préférées.

De le même manière, la première couche est appliquée sur la support par pulvérisation ou enduction par presse encolleuse ou rouleau à cadre rotatif.

Par ailleurs et selon une autre caractéristique, le tissu de carbone activé est solidarisé au support enduit de la première couche à base d'agent photocatalyseur par tout moyen connu, en particulier du type aiguilletage . La couture est avantageusement périphérique.

L'invention concerne également l'utilisation du média filtrant précédemment décrit pour le traitement de l'air, mais également pour le traitement d'effluents liquides.

L'invention et les avantages qui découlent ressortiront mieux des exemples de réalisation qui suivent à l'appui des figures annexées.
La figure 1 est une représentation schématique d'un pilote de traitement d'air.
La figure 2 est une courbe représentant la dégradation, sous irradiation UV, d'un agent polluant en fonction du temps et la transformation de cet agent en CO₂ en mettant en oeuvre un média filtrant recouvert uniquement d'agent photocatalyseur.
La figure 3 est une courbe représentant la dégradation d'un agent polluant et la transformation de cet agent en CO₂ en fonction du temps en mettant en oeuvre le média filtrant de l'invention sans puis sous irradiation UV.
La figure 4 est une courbe représentant la dégradation, sous irradiation UV, d'un agent polluant et la transformation de cet agent en CO₂ en fonction du temps en mettant en oeuvre le média filtrant de l'invention.

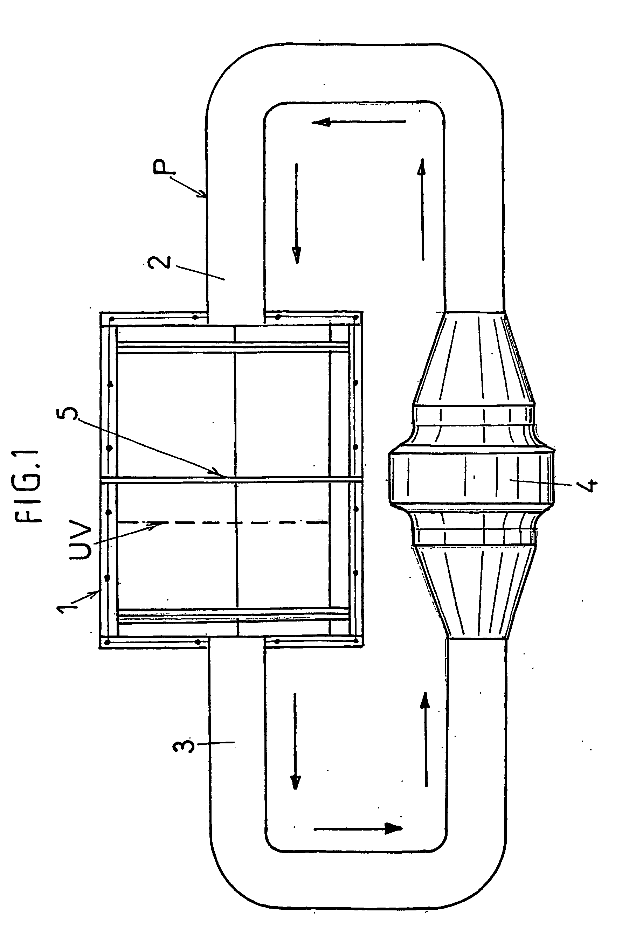

Sur la figure 1, on a représenté un pilote de traitement d'air constitué d'une enceinte de 100 litres (1) connectée à ses deux extrémités respectivement à un tuyau d'arrivée d'air pollué (2) et un tuyau de sortie d'air dépollué (3). Les 2 tuyaux forment une boucle et sont séparés l'un de l'autre par le biais d'un système de ventilation (4). L'agent polluant (P) est injecté en amont de l'enceinte (1). L'enceinte est en outre équipée d'un média filtrant (5) positionné perpendiculairement au flux d'air et d'une source de rayonnement ultra violet (UV), ladite source étant positionnée de sorte à irradier la face du support recouverte de la composition photocatalytique. Trois essais comparatifs ont été conduits à partir de ce pilote, en injectant dans le circuit d'air une quantité de 400 mg/m³ de toluène. L'analyse de la concentration en toluène pendant le traitement est effectuée par chromatographie en phase gazeuse (CPG).

Le premier essai consiste à utiliser en tant que média filtrant, un non tissé (40 g/m²) (50 % de fibres synthétiques de polypropylène, Y600 commercialisé par MITSUI / 50 % en poids de fibres cellulosiques (PENSACOLA, commercialisé par CHAMPION) enduit d'une composition photocatalytique à base de TiO₂ et de SiO₂ (SNOWTEX 50, commercialisé par SEPPIC), à raison de 20 g/m² chacun.

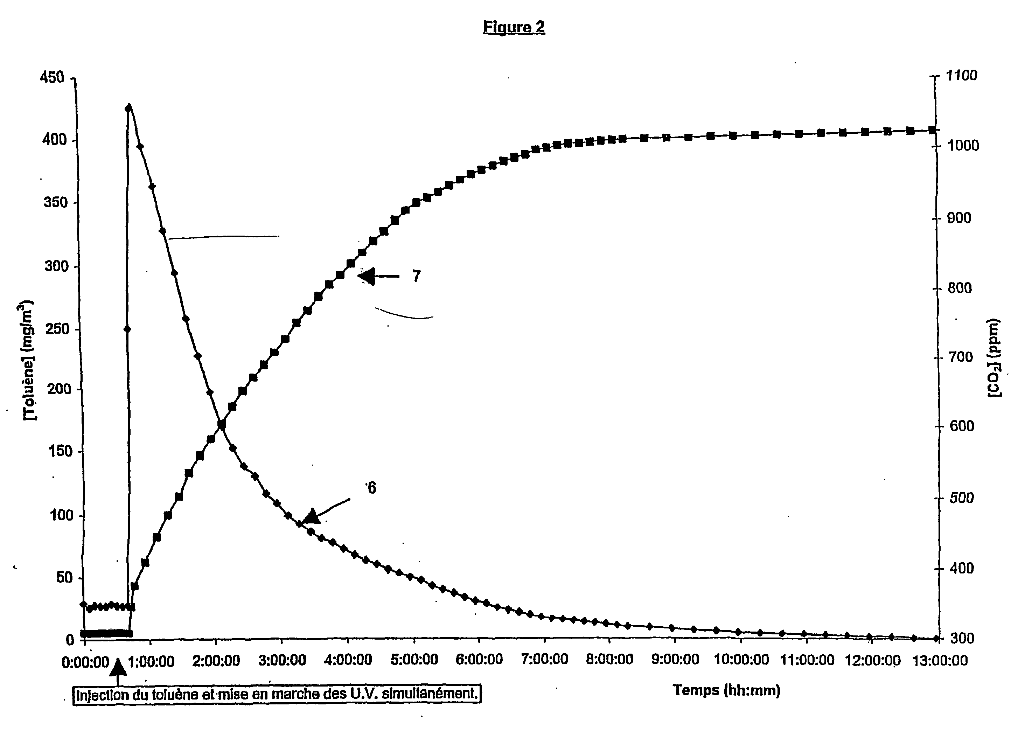

Sur la figure 2, on a représenté la capacité du média et donc de la composition photocatalytique à dégrader l'agent polluant en fonction du temps, sous irradiations UV. Comme le montre cette figure, la concentration d'agent polluant diminue lentement (courbe 6) pour se transformer à la même vitesse en CO₂.(courbe 7) Après 12 heures de fonctionnement de la boucle, la totalité de l'agent polluant est dégradé et transformé en CO₂.

Les second et troisième essais consistent à utiliser en tant que média filtrant, le média filtrant de l'invention. Ce média est fabriqué de la manière suivante.

Sur une machine à papier à deux caisses de tête, on réalise par voie humide, à partir de la première caisse, un support constitué d'un mélange fibreux à raison de 30g/ m² sec comprenant (50 % de fibres synthétiques de polypropylène, Y600 commercialisé par MITSUI / 50 % en poids de fibres cellulosiques (PENSACOLA, commercialisé par CHAMPION))

Sur ce support, on applique par le biais de la caisse secondaire, une nappe fibreuse à raison de 70 g/m² constituée de 71% en poids de fibres de carbone activée commercialisée par SOFRANCE, dont la longueur est comprise entre 2 et 7 mm, et le diamètre compris entre 10 et 100 micromètres, et de 21% en poids d'un mélange de fibres naturelles PENSACOLA, commercialisé par CHAMPION et 8% d'amidon modifié commercialisé par BEGHIN SAY sous la marque CHART ***BI*****.**

On enduit ensuite par cadre rotatif une composition photocatalytique constituée d'un mélange de TiO₂ (commercialisé par MILLENIUM) et d'une dispersion aqueuse de dioxyde de silice (SNOWTEX 50, commercialisé par SEPPIC) à raison de 20 g/m² chacun.

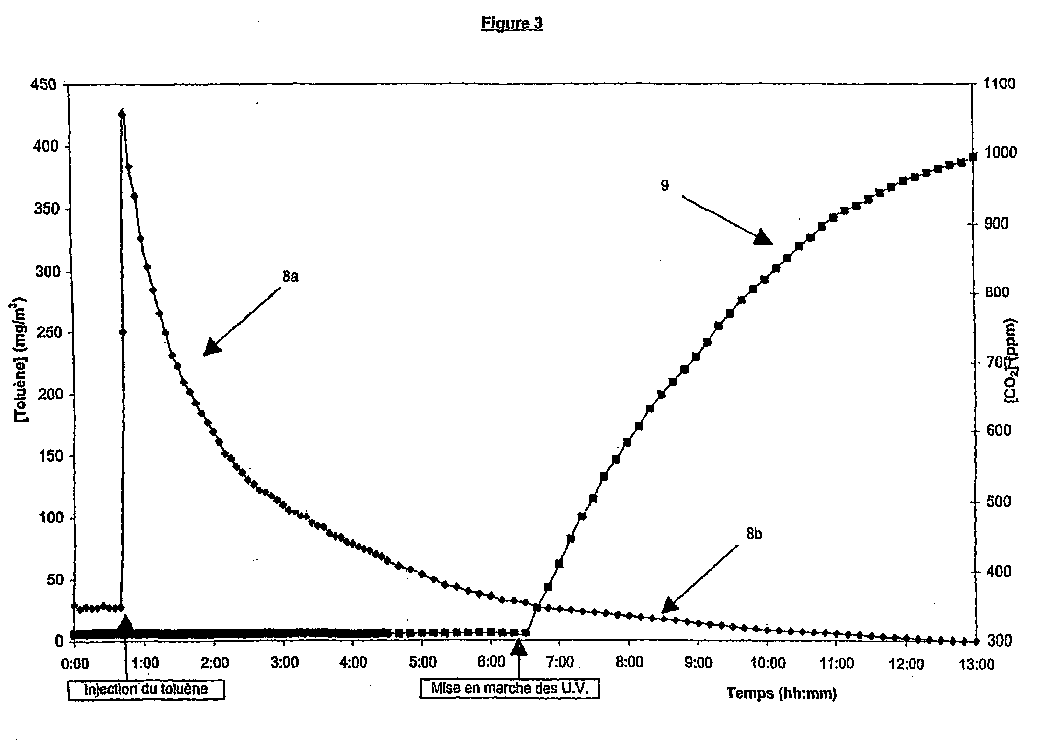

Sur la figure 3, on a représenté le taux de dégradation de l'agent polluant (courbe 8a, 8b) et de sa transformation en CO₂ (courbe 9) en fonction du temps d'abord sans rayonnement UV, puis sous rayonnement UV.

Comme le montre cette figure, entre le moment où l'agent polluant est injecté dans le système et celui où les lampes UV sont mises sous tension, la concentration en agent polluant diminue assez rapidement (courbe 8a) correspondant à l'adsorption de l'agent polluant sur les sites du charbon actif et pour une moindre partie, sur ceux du TiO₂. Lorsque les lampes UV sont mises sous tension, la dégradation du polluant se poursuit (courbe 8b) correspondant à la réaction de photocatalyse. Parallèlement, on observe un dégagement de CO₂ (courbe 4) issu de la transformation de l'agent polluant.

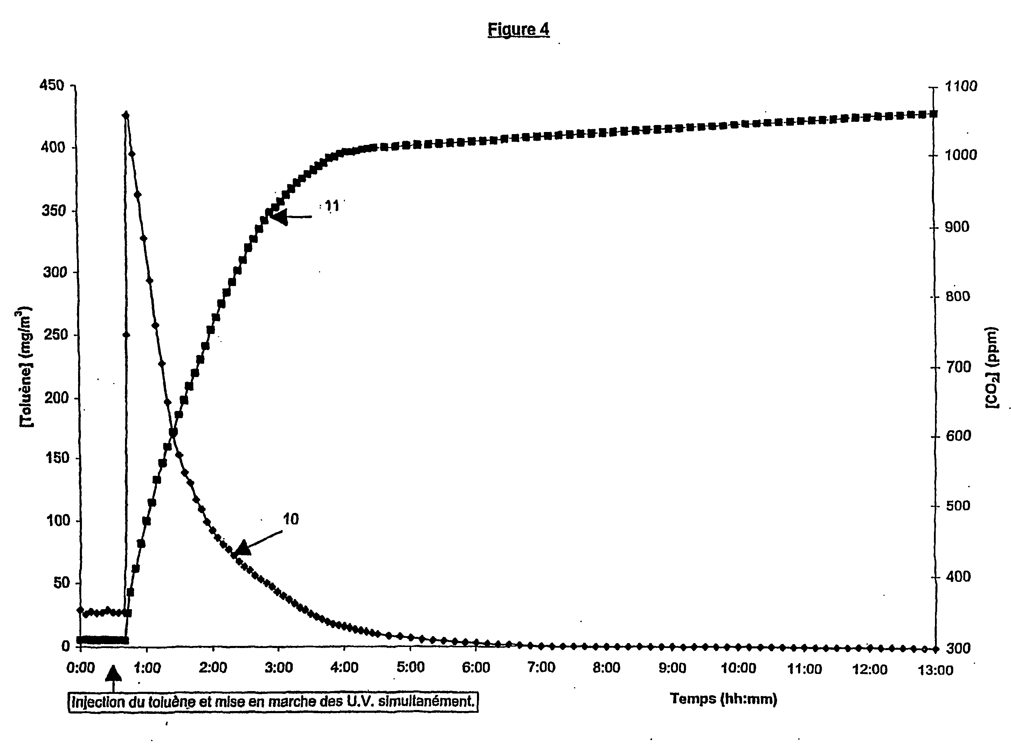

Sur la figure 4, on a représenté le taux de dégradation de l'agent polluant (courbe 10) et de sa transformation en CO₂ (courbe 11) en fonction du temps sous rayonnement.

Comme le montre cette figure, la dégradation de l'agent polluant (courbe 10) est au départ très rapide dans la mesure où le polluant adsorbé sur les sites de charbon actif est dégradé simultanément en CO₂ par photocatalyse (courbe 11). Les sites de charbon sont désorbés en continu, permettant d'accélérer la dépollution. C'est ainsi que l'on constate que le média filtrant de l'invention permet de traiter, sous rayonnement UV, une même concentration d'agent polluant en pratiquement deux fois moins de temps (7 heures) que sans rayonnement (voir figure 2).

L'invention et ses avantages ressortent bien de la description qui précède. On notera en particulier la vitesse de dépollution améliorée du média filtrant de l'invention par rapport à un média uniquement à base d'agent photocatalyseur. Un autre avantage réside dans la non saturation des sites du charbon actif par l'agent polluant permettant une régénération continue dudit charbon actif.

## Revendications

1. Média filtrant constitué d'un support perméable recouvert de deux couches distinctes à base d'agent photocatalyseur et de charbon actif, respectivement, où :
- la première couche se présente sous la forme d'une nappe constituée d'un mélange comprenant :
• de 20 à 75% en poids de fibres de carbone activé, incorporées à un mélange à base de fibres naturelles et/ou de fibres chimiques organiques constituant le complément à 100%, ou
• de 70 à 90% en poids de particules de carbone activé, incorporées à un mélange à base de fibres naturelles et/ou de fibres chimiques organiques constituant le complément à 100%,
la masse de cette couche étant comprise entre 10 et 300 g/m² ;
- la seconde couche distincte, appliquée sur la première couche, est constituée d'une composition photocatalytique comprenant 5 à 40 g/m² d'agent photocatalyseur ;
ou inversement :
- la première couche est constituée d'une composition photocatalytique comprenant 5 à 40 g/m² d'agent photocatalyseur ;
- la seconde couche distincte, appliquée sur la première couche, se présente sous la forme d'une nappe constituée d'un mélange comprenant :
• de 20 à 75% en poids de fibres de carbone activé, incorporées à un mélange à base de fibres naturelles et/ou de fibres chimiques organiques constituant le complément à 100%, ou
• de 70 à 90% en poids de particules de carbone activé, incorporées à un mélange à base de fibres naturelles et/ou de fibres chimiques organiques constituant le complément à 100%,
la masse de cette couche étant comprise entre 10 et 300 g/m².

2. Média filtrant selon la revendication 1, **caractérisé en ce que** le support se présente sous la forme d'un non tissé à base de fibres naturelles et/ou de fibres chimiques organiques.

3. Média filtrant selon la revendication 1, **caractérisé en ce que** le support comprend de 40 à 80%, avantageusement 50% en poids de fibres de cellulose, le complément à 100% étant constitué de fibres de polypropylène.

4. Média filtrant selon la revendication 1, **caractérisé en ce que** le support a une masse comprise entre 5 et 150 g/m².

5. Média filtrant selon la revendication 1, **caractérisé en ce que** la couche à base de charbon actif est constituée d'un mélange comprenant 50% en poids de fibres de carbone activé, incorporées à un mélange à base de fibres naturelles et/ou de fibres chimiques organiques constituant le complément à 100%.

6. Média filtrant selon la revendication 1, **caractérisé en ce que** la couche à base de charbon actif est constituée d'un mélange comprenant 80% en poids de particules de carbone activé, incorporées à un mélange à base de fibres naturelles et/ou de fibres chimiques organiques constituant le complément à 100%.

7. Média filtrant selon la revendication 1, **caractérisé en ce que** la couche à base de charbon actif comprend en outre de 1 à 10% en poids, avantageusement 5% en poids d'amidon modifié.

8. Média filtrant selon la revendication 1, **caractérisé en ce que** la couche à base de charbon actif se présente sous forme d'un tissu de carbone activé dont la maille est comprise entre 0,1 et 5 mm, avantageusement 2 mm.

9. Média filtrant selon la revendication 1, **caractérisé en ce que** la couche à base d'agent photocatalyseur se présente sous la forme d'un mélange comprenant entre 10 et 60 parties (en sec), avantageusement 50 parties, d'une dispersion colloïdale aqueuse de dioxyde de silice, le complément à 100 parties étant constitué de TiO₂ anatase.

10. Média filtrant selon la revendication 10, **caractérisé en ce que** les particules de SiO₂ représentent de 20 à 50% en poids de la dispersion aqueuse colloïdale et ont un diamètre compris entre 10 et 40 nanomètres.

11. Média filtrant selon la revendication 1, **caractérisé en ce que** la couche constituée d'une composition photocatalytique comprend 20 g/m² d'agent photocatalyseur.

12. Média filtrant constitué d'un média selon la revendication 1 et d'une couche à base d'agent photocatalyseur enduite sur la face libre du support du média selon la revendication 1.

13. Procédé pour la fabrication d'un média filtrant tel que défini dans l'une des revendications 1 à 12 selon lequel on applique, sur un support se présentant sous la forme d'un non tissé à base de fibres naturelles et/ou de fibres chimiques organiques, une première couche à base de fibres naturelles et/ou chimiques organiques et de fibres ou des particules de carbone activé, puis une seconde couche à base d'agent photocatalyseur.

14. Procédé selon la revendication 13, **caractérisé en ce que** le support est fabriqué par voie humide.

15. Procédé selon la revendication 13, **caractérisé en ce que** la première couche est fabriquée par voie humide et solidarisée au support par égouttage.

16. Procédé selon la revendication 13, **caractérisé en ce que** la seconde couche est appliquée sur la première couche par pulvérisation ou enduction par presse encolleuse ou rouleau à cadre rotatif.

17. Procédé pour la fabrication d'un média filtrant tel que défini dans l'une des revendications 1 à 12 selon lequel on applique, sur un support se présentant sous la forme d'un non tissé à base de fibres naturelles et/ou de fibres chimiques organiques, une première couche à base d'agent photocatalyseur, puis une seconde couche à base de fibres naturelles et/ou chimiques organiques et de fibres ou des particules de carbone activé.

18. Procédé selon la revendication 17, **caractérisé en ce que** le support est fabriqué par voie humide.

19. Procédé selon la revendication 17, **caractérisé en ce que** la première couche est appliquée sur la première couche par pulvérisation ou enduction par presse encolleuse ou rouleau à cadre rotatif.

20. Procédé selon la revendication 17, **caractérisé en ce que** le tissu de carbone activé est solidarisé au support par aiguilletage.

## Claims

1. A filtering medium consisting of a permeable support covered with two separate layers respectively a photocatalytic agent-based layer and an activated carbon-based layer where:
- the first layer is provided in the form of a sheet consisting of a mixture comprising:
. from 20 to 75 % by weight of activated carbon fibers, the balance for 100 % consisting of a mixture based on natural fibers and/or organic chemical fibers, or
. from 70 to 90 % by weight of activated carbon particles, the balance for 100 % consisting of a mixture based on natural fibers and/or organic chemical fibers,
the mass of this layer being between 10 and 300 g/m² ;
- the separate second layer, applied on the first layer, consists of a photocatalytic composition comprising from 5 to 40 g/m² of photocatalytic agent ;
or vice versa :
- the first layer consists of a photocatalytic composition comprising from 5 to 40 g/m² of photocatalytic agent,
- the separate second layer, applied on the first layer, is provided in the form of a sheet consisting of a mixture comprising:
. from 20 to 75 % by weight of activated carbon fibers, the balance for 100 % consisting of a mixture based on natural fibers and/or organic chemical fibers, or
. from 70 to 90 % by weight of activated carbon particles, the balance for 100 % consisting of a mixture based on natural fibers and/or organic chemical fibers,
the mass of this layer being between 10 and 300 g/m².

2. The filtering medium as claimed in claim 1, **characterized in that** the support is provided in the form of a nonwoven based on natural fibers and/or organic chemical fibers.

3. The filtering medium as claimed in claim 1, **characterized in that** the support comprises from 40 to 80 %, advantageously 50 % by weight of cellulose fibers, the balance for 100 % consisting of polypropylene fibers.

4. The filtering medium as claimed in claim 1, **characterized in that** the support has a mass of between 5 and 150 g/m².

5. The filtering medium as claimed in claim 1, **characterized in that** the activated carbon-based layer consists of a mixture comprising 50 % by weight of activated carbon fibers, the balance for 100 % consisting of a mixture based on natural fibers and/or organic chemical fibers.

6. The filtering medium as claimed in claim 1, **characterized in that** the activated carbon-based layer consists of a mixture comprising 80 % by weight of activated carbon particles, the balance for 100 % consisting of a mixture based on natural fibers and/or organic chemical fibers.

7. The filtering medium as claimed in claim 1, **characterized in that** the activated carbon-based layer comprises, in addition, from 1 to 10 % by weight, advantageously 5 % by weight of modified starch.

8. The filtering medium as claimed in claim 1, **characterized in that** the activated carbon-based layer is provided in the form of an activated carbon fabric whose mesh is between 0.1 and 5 mm, advantageously 2 mm.

9. The filtering medium as claimed in claim 1, **characterized in that** the photocatalytic agent-based layer is provided in the form of a mixture comprising between 10 and 60 parts (on a dry basis), advantageously 50 parts of an aqueous colloidal dispersion of silicon dioxide, the balance for 100 parts consisting of TiO₂ anatase.

10. The filtering medium as claimed in claim 9, **characterized in that** the particles of SiO₂ represent from 20 to 50 % by weight of the aqueous colloidal dispersion and have a diameter of between 10 and 40 nanometers.

11. The filtering medium as claimed in claim 1, **characterized in that** the photocatalytic agent-based layer comprises 20 g/m² of photocatalytic agent.

12. A filtering medium consisting of a medicum according to claim 1 and of a photocatalytic agent-based layer coated on the free surface of the support of the medium according to claim 1.

13. A method for making a filtering medium as claimed in one of claims 1 to 12 according to which, onto a support consisting of a nonwoven based on natural fibers and/or on organic chemical fibers, there are applied a first layer based on natural and/or organic chemical fibers and on fibers or particles of activated carbon, and then a second photocatalytic agent-based layer.

14. The method as claimed in claim 13, **characterized in that** the support is made by the wet route.

15. The method as claimed in claim 13, **characterized in that** the first layer is made by the wet route and is attached to the support by draining.

16. The method as claimed in claim 13, **characterized in that** the second layer is applied to the first layer by spraying or coating using a size press or a rotary frame roller.

17. A method for making a filtering medium as claimed in one of claims 1 to 12 according to which, to a support consisting of a nonwoven based on natural fibers and/or organic chemical fibers, there are applied a first photocatalytic agent-based layer, and then a second layer based on natural and/or organic chemical fibers and on fibers or particles of activated carbon.

18. The method as claimed in claim 17, **characterized in that** the support is made by the wet route.

19. The method as claimed in claim 17, **characterized in that** the first layer is applied to the support by spraying or coating using a size press or a rotary frame roller.

20. The method as claimed in claim 17, **characterized in that** activated carbon fabric is attached to the support by needle bonding.

## Patentansprüche

1. Filtermedium, bestehend aus einem durchlässigen Träger, der mit zwei verschiedenen Schichten aus einem Photokatalysatormittel bzw. aus Aktivkohle beschichtet ist, wobei
- die erste Schicht die Form einer aus einem Gemisch gebildeten Lage aufweist, welche folgendes umfaßt:
• 20 bis 75 Gewichtsprozent Fasern aus aktiviertem Kohlenstoff, welche einem Gemisch aus natürlichen Fasern und/oder organischen Chemiefasern zugesetzt sind, die die Ergänzung zu 100% bilden, oder
• 70 bis 90 Gewichtsprozent Partikel aus aktiviertem Kohlenstoff, welche einem Gemisch aus natürlichen Fasern und/oder organischen Chemiefasern zugesetzt sind, die die Ergänzung zu 100% bilden,
wobei die Masse dieser Schicht zwischen 10 und 300 g/m² liegt,
- und wobei die zweite der verschiedenen Schichten, welche auf die erste Schicht aufgebracht ist, aus einer photokatalytischen Zusammensetzung besteht, die 5 bis 40 g/m² Photokatalysatormittel umfaßt;
oder umgekehrt:
- die erste Schicht aus einer photokatalytischen Zusammensetzung besteht, die 5 bis 40 g/m² Photokatalysatormittel umfaßt;
- die zweite der verschiedenen Schichten, welche auf die erste Schicht aufgebracht ist, die Form einer aus einem Gemisch gebildeten Bahn aufweist, welche folgendes umfaßt:
• 20 bis 75 Gewichtsprozent Fasern aus aktiviertem Kohlenstoff, welche einem Gemisch aus natürlichen Fasern und/oder organischen Chemiefasern zugesetzt sind, die die Ergänzung zu 100% bilden, oder
• 70 bis 90 Gewichtsprozent Partikel aus aktiviertem Kohlenstoff, welche einem Gemisch aus natürlichen Fasern und/oder organischen Chemiefasern zugesetzt sind, die die Ergänzung zu 100% bilden,
wobei die Masse dieser Schicht zwischen 10 und 300 g/m² liegt.

2. Filtermedium nach Anspruch 1, **dadurch gekennzeichnet, daß** der Träger die Form eines Vlieses aus natürlichen Fasern und/oder organischen Chemiefasern aufweist.

3. Filtermedium nach Anspruch 1, **dadurch gekennzeichnet, daß** der Träger 40 bis 80 Gewichtsprozent, vorteilhafterweise 50 Gewichtsprozent Zellulosefasern umfaßt, wobei die Ergänzung zu 100% aus Polypropylenfasern gebildet ist.

4. Filtermedium nach Anspruch 1, **dadurch gekennzeichnet, daß** der Träger eine Masse zwischen 5 und 150 g/m² aufweist.

5. Filtermedium nach Anspruch 1, **dadurch gekennzeichnet, daß** die Schicht aus Aktivkohle aus einem Gemisch gebildet ist, welches 50 Gewichtsprozent Fasern aus aktiviertem Kohlenstoff umfaßt, die einem Gemisch aus natürlichen Fasern und/oder organischen Chemiefasern zugesetzt sind, welche die Ergänzung zu 100% bilden.

6. Filtermedium nach Anspruch 1, **dadurch gekennzeichnet, daß** die Schicht aus Aktivkohle aus einem Gemisch gebildet ist, welches 80 Gewichtsprozent Partikel aus aktiviertem Kohlenstoff umfaßt, die einem Gemisch aus natürlichen Fasern und/oder organischen Chemiefasern zugesetzt sind, welche die Ergänzung zu 100% bilden.

7. Filtermedium nach Anspruch 1, **dadurch gekennzeichnet, daß** die Schicht aus Aktivkohle ferner 1 bis 10 Gewichtsprozent, vorteilhafterweise 5 Gewichtsprozent, modifizierte Stärke umfaßt.

8. Filtermedium nach Anspruch 1, **dadurch gekennzeichnet, daß** die Schicht aus Aktivkohle die Form eines Gewebes aus aktiviertem Kohlenstoff aufweist, dessen Maschengröße zwischen 0,1 und 5 mm, vorteilhafterweise 2 mm, beträgt.

9. Filtermedium nach Anspruch 1, **dadurch gekennzeichnet, daß** die Schicht aus Photokatalysatormittel die Form eines Gemischs aufweist, welches zwischen 10 und 60 Teilen (im trockenen Zustand), vorteilhafterweise 50 Teile, einer wäßrigen Siliziumdioxid-Kolloiddispersion umfaßt, wobei die Ergänzung zu 100 Teilen aus TiO₂ (Titandioxid) gebildet ist.

10. Filtermedium nach Anspruch 9, **dadurch gekennzeichnet, daß** die SiO₂-Partikel 20 bis 50 Gewichtsprozent der wäßrigen Kolloiddispersion darstellen und einen Durchmesser zwischen 10 und 40 Nanometer aufweisen.

11. Filtermedium nach Anspruch 1, **dadurch gekennzeichnet, daß** die aus einer photokatalytischen Zusammensetzung gebildete Schicht 20 g/m² Photokatalysatormittel umfaßt.

12. Filtermedium, bestehend aus einem Medium nach Anspruch 1 und einer Schicht aus einem Photokatalysatormittel, mit der die freie Seite des Trägers des Mediums nach Anspruch 1 beschichtet ist.

13. Verfahren zur Herstellung eines Filtermediums, wie es in einem der Ansprüche 1 bis 12 definiert ist, gemäß dem auf einen die Form eines Vlieses aus natürlichen Fasern und/oder organischen Chemiefasern aufweisenden Träger eine erste Schicht aus natürlichen Fasern und/oder organischen Chemiefasern und aus Fasern oder Partikeln aus aktiviertem Kohlenstoff aufgebracht wird und danach eine zweite Schicht aus Photokatalysatormittel aufgebracht wird.

14. Verfahren nach Anspruch 13, **dadurch gekennzeichnet, daß** der Träger im Naßverfahren hergestellt wird.

15. Verfahren nach Anspruch 13, **dadurch gekennzeichnet, daß** die erste Schicht im Naßverfahren hergestellt und mit dem Träger durch Entwässerung verbunden wird.

16. Verfahren nach Anspruch 13, **dadurch gekennzeichnet, daß** die zweite Schicht auf die erste Schicht durch Aufsprühen oder Beschichtung mit einer Leimpresse oder einer Rotationsdruckwalze aufgebracht wird.

17. Verfahren zur Herstellung eines Filtermediums, wie es in einem der Ansprüche 1 bis 12 definiert ist, gemäß dem auf einen die Form eines Vlieses aus natürlichen Fasern und/oder organischen Chemiefasern aufweisenden Träger eine erste Schicht aus Photokatalysatormittel aufgebracht wird und danach eine zweite Schicht aus natürlichen Fasern und/oder organischen Chemiefasern und aus Fasern oder Partikeln aus aktiviertem Kohlenstoff aufgebracht wird.

18. Verfahren nach Anspruch 17, **dadurch gekennzeichnet, daß** der Träger im Naßverfahren hergestellt wird.

19. Verfahren nach Anspruch 17, **dadurch gekennzeichnet, daß** die erste Schicht auf den Träger durch Aufsprühen oder Beschichtung mit einer Leimpresse oder einer Rotationsdruckwalze aufgebracht wird.

20. Verfahren nach Anspruch 17, **dadurch gekennzeichnet, daß** das Gewebe aus aktiviertem Kohlenstoff mit dem Träger durch Vernadeln fest verbunden wird.
